# EUROPÄISCHE PATENTANMELDUNG

(11) **EP 4 484 762 A1**
(43) Veröffentlichungstag der Anmeldung: **01.01.2025**
(21) Anmeldenummer: 24182147.9
(22) Anmeldetag: 14.06.2024
(51) Int. Cl.: F15B 11/16, B62D 5/07

(54) **ANORDNUNG ZUM BETREIBEN EINES LASTGESTEUERTEN HYDRAULIKSYSTEMS EINES LANDWIRTSCHAFTLICHEN TRAKTORS**

(30) Priorität: 30.06.2023 DE 102023117329; 03.07.2023 DE 102023117494
(71) Anmelder: Deere & Company, Moline, IL 61265 (US)
(72) Erfinder: Billich, Manuel, Mannheim (DE)
(74) Vertreter: Dehnhardt, Florian Christopher

(57) **Zusammenfassung**

Anordnung (10) zum Betreiben eines lastgesteuerten Hydrauliksystems (12) eines landwirtschaftlichen Traktors, umfassend
eine bezüglich ihres Verdrängungsvolumens einstellbare Hydraulikpumpe (14) zur Versorgung mehrerer hydraulischer Verbraucher (16) mit unter Druck stehender Hydraulikflüssigkeit, wobei die Einstellung des Verdrängungsvolumens der Hydraulikpumpe (14) in Abhängigkeit eines an eine Stelleinrichtung (18) der Hydraulikpumpe (14) übermittelten Lastmeldedrucks (LS_Pump) erfolgt. Es sind wenigstens zwei hydraulische Verbraucher (16a, 16b) vorhanden, die entsprechend einer Lastanforderung einen ersten und zweiten Lastmeldedruck (LS_P1S, LS_P1B) an eine Wechselventileinrichtung (32) rückmelden, wobei die Wechselventileinrichtung (32) den jeweils höheren zur Einstellung des Verdrängungsvolumens an die Stelleinrichtung (18) der Hydraulikpumpe (14) übermittelt. Bei einem der hydraulischen Verbraucher (16a) handelt es sich um eine hydrostatische Fahrzeuglenkung (20), wobei deren Lastmeldedruck (LS_P1S) lediglich mittelbar über ein Druckkopierventil (50) an die Wechselventilanordnung (32) rückgemeldet wird.

## Beschreibung

Die Erfindung betrifft eine Anordnung zum Betreiben eines lastgesteuerten Hydrauliksystems eines landwirtschaftlichen Traktors, umfassend eine bezüglich ihres Verdrängungsvolumens einstellbare Hydraulikpumpe zur Versorgung hydraulischer Verbraucher mit unter Druck stehender Hydraulikflüssigkeit, wobei die Einstellung des Verdrängungsvolumens der Hydraulikpumpe in Abhängigkeit eines an eine Stelleinrichtung der Hydraulikpumpe übermittelten Lastmeldedrucks erfolgt. Des Weiteren weist die Anordnung einen als hydrostatische Fahrzeuglenkung ausgebildeten ersten hydraulischen Verbraucher mit einem Lenkorbitrol sowie einem dem Lenkorbitrol vorgeschalteten Druckregelventil auf, das in Abhängigkeit einer über ein Drosselelement abfallenden Druckdifferenz entgegen einer vorbestimmten Rückstellkraft in Abhängigkeit einer durch einen ersten Lastmeldedruck repräsentierten Lastanforderung der hydrostatischen Fahrzeuglenkung betätigt wird. Es ist wenigstens ein zweiter hydraulischer Verbraucher vorhanden, der eine durch einen zweiten Lastmeldedruck repräsentierte Lastanforderung an eine Wechselventilanordnung rückmeldet, wobei die Wechselventilanordnung den zweiten Lastmeldedruck mit dem ersten Lastmeldedruck vergleicht sowie den jeweils höheren zur Einstellung des Verdrängungsvolumens der Hydraulikpumpe an die Stelleinrichtung der Hydraulikpumpe übermittelt.

Ein derart aufgebautes lastgesteuertes Hydrauliksystem findet beispielsweise in landwirtschaftlichen Traktoren der 6R-Serie des Herstellers John Deere Verwendung. Das Hydrauliksystem umfasst hierzu eine aus einem Hydraulikreservoir des landwirtschaftlichen Traktors mit Hydraulikflüssigkeit gespeiste Hydraulikpumpe, deren Verdrängungsvolumen mit dem Betrag eines an einem Steuereingang anliegenden Lastmeldedrucks zunimmt. Auf diese Weise ist eine dem tatsächlichen Leistungsbedarf entsprechende Hydraulikversorgung einer Vielzahl hydraulischer Verbraucher des landwirtschaftlichen Traktors möglich. Hierzu gehören primäre hydraulische Verbraucher, die der Ausführung übergeordneter Hydraulikfunktionen einer hydrostatischen Fahrzeuglenkung sowie einer hydraulischen Bremsanlage dienen, wie auch sekundäre hydraulische Verbraucher zur Ausführung untergeordneter Hydraulikfunktionen, die diverse Komfort- und Arbeitsfunktionen des landwirtschaftlichen Traktors betreffen, wie zum Beispiel einer hydraulischen Achs- oder Kabinenfederung, einer Arbeitshydraulik einschließlich der Versorgung hydraulisch betriebener Arbeitsaggregate eines an dem landwirtschaftlichen Traktor angebrachten Zusatz- oder Anbaugeräts, aber auch eines hydraulisch betätigbaren Dreipunkt-Krafthebers.

Um für den Fall einer Vielzahl unterschiedlicher hydraulischer Verbraucher eine bedarfsdeckende Versorgung mit hydraulischer Energie sicherzustellen, orientiert sich die Vorgabe des Verdrängungsvolumens am jeweils höchsten der von den hydraulischen Verbrauchern rückgemeldeten Lastmeldedrücke. Zu diesem Zweck ist eine aus hydraulischen Wechselventilen bestehende Schaltlogik vorgesehen, die die an zugehörigen Lastmeldeleitungen anliegenden Lastmeldedrücke paarweise kaskadenartig miteinander vergleicht und den jeweils höchsten an den Steuereingang der Hydraulikpumpe weiterleitet. Je nach Schaltzustand der Wechselventile werden innerhalb der Schaltlogik unterschiedliche Strömungspfade durchlaufen, die der Drainage der Hydraulikflüssigkeit in Richtung eines Hydraulikreservoirs des Hydrauliksystems dienen. Aufgrund der sich daraus ergebenden Variationen des Hydraulikflusses in den Lastmeldeleitungen lassen sich Rückwirkungen auf die an diesen anliegenden Lastmeldedrücke nicht ausschließen. Im Falle eines als hydrostatische Fahrzeuglenkung ausgebildeten hydraulischen Verbrauchers kann dies abhängig vom Schaltzustand der Wechselventilanordnung zu unerwünschten Veränderungen des Lenkverhaltens führen.

Es ist daher Aufgabe der vorliegenden Erfindung, eine hinsichtlich eines Betriebs einer hydrostatischen Fahrzeuglenkung verbesserte Anordnung der eingangs genannten Art anzugeben.

Diese Aufgabe wird durch eine Anordnung zum Betreiben eines lastgesteuerten Hydrauliksystems eines landwirtschaftlichen Traktors mit den Merkmalen des Patentanspruchs 1 gelöst.

Die Anordnung zum Betreiben eines lastgesteuerten Hydrauliksystems eines landwirtschaftlichen Traktors umfasst eine bezüglich ihres Verdrängungsvolumens einstellbare Hydraulikpumpe zur Versorgung hydraulischer Verbraucher mit unter Druck stehender Hydraulikflüssigkeit, wobei die Einstellung des Verdrängungsvolumens der Hydraulikpumpe in Abhängigkeit eines an eine Stelleinrichtung der Hydraulikpumpe übermittelten Lastmeldedrucks erfolgt. Des Weiteren weist die Anordnung einen als hydrostatische Fahrzeuglenkung ausgebildeten ersten hydraulischen Verbraucher mit einem Lenkorbitrol sowie einem dem Lenkorbitrol vorgeschalteten Druckregelventil auf, das in Abhängigkeit einer über ein Drosselelement abfallenden Druckdifferenz entgegen einer vorbestimmten Rückstellkraft in Abhängigkeit einer durch einen ersten Lastmeldedruck repräsentierten Lastanforderung der hydrostatischen Fahrzeuglenkung betätigt wird. Es ist wenigstens ein zweiter hydraulischer Verbraucher vorhanden, der eine durch einen zweiten Lastmeldedruck repräsentierte Lastanforderung an eine Wechselventilanordnung rückmeldet, wobei die Wechselventilanordnung den zweiten Lastmeldedruck mit dem ersten Lastmeldedruck vergleicht sowie den jeweils höheren zur Einstellung des Verdrängungsvolumens der Hydraulikpumpe an die Stelleinrichtung der Hydraulikpumpe übermittelt. Dabei wird der erste Lastmeldedruck lediglich mittelbar über ein zur fluidischen Trennung vorgesehenes Druckkopierventil an die Wechselventilanordnung rückgemeldet, wozu das Druckkopierventil einen mittels der Hydraulikpumpe erzeugten Systemdruck durch Reduzierung auf einen dem ersten Lastmeldedruck folgenden Hydraulikdruck an die Wechselventilanordnung übermittelt.

Mit anderen Worten dient der erste Lastmeldedruck lediglich der Ansteuerung des Druckkopierventils, ohne dass dabei ein nennenswerter Hydraulikfluss auftritt. Eine unmittelbare fluidische Verbindung mit der Wechselventilanordnung besteht insofern nicht, sodass sich unerwünschte Rückwirkungen auf den ersten Lastmeldedruck verlässlich ausschließen lassen. Für den Fall des als hydrostatische Fahrzeuglenkung ausgebildeten ersten hydraulischen Verbrauchers gewährleistet dies ein vom Schaltzustand der Wechselventilanordnung unabhängiges gleichbleibendes Lenkverhalten.

Lastspitzen, die beim Betrieb der hydrostatischen Fahrzeuglenkung auftreten, führen zu einer entsprechenden Erhöhung der über das Drosselelement abfallenden Druckdifferenz und verursachen eine Zunahme der Auslenkung des dem Lenkorbitrol vorgeschalteten Druckregelventils in Richtung einer durchlässigen Stellung, was aufgrund der kurzen Regelstrecke zu einer besonders reaktionsarmen und damit "dynamischen" Anpassung eines zum Betrieb der hydrostatischen Fahrzeuglenkung erzeugten Hydraulikdrucks führt. Die Druckdifferenz wird hierzu in der Größenordnung von 10 bis 20 bar vorgegeben.

Der geringfügige, aber kontinuierliche Fluss von Hydraulikflüssigkeit durch das Drosselelement im Bereich von 1 bis 5 Litern pro Minute gewährleistet zudem, dass ein innerhalb des Hydraulikreislaufs der hydrostatischen Fahrzeuglenkung bei einem Kaltstart des landwirtschaftlichen Traktors vorhandenes Temperaturgefälle rasch abgebaut wird, ein Verklemmen insbesondere des Lenkorbitrols aufgrund thermischer Unterschiede bzw. dadurch verursachter mechanischer Spannungen nicht auftritt. Dies ist vor allem bei niedrigen bzw. winterlichen Außentemperaturen von Belang.

Bei der zur Einstellung des Verdrängungsvolumens der Hydraulikpumpe vorgesehenen Stelleinrichtung kann es sich entweder um einen unmittelbar druckbetätigten Aktuator oder aber um einen nach Maßgabe einer sensorischen Druckerfassung elektrisch betätigten Aktuator handeln. In beiden Fällen dient der Aktuator der gezielten Veränderung eines Pumpenschwenkwinkels, wobei das Verdrängungsvolumen der Hydraulikpumpe mit größer werdendem Pumpenschwenkwinkel zunimmt.

Da zum Betrieb der hydraulischen Verbraucher ein und dieselbe Hydraulikpumpe dient, deren Förderkapazität jedoch begrenzt ist, sind den hydraulischen Verbrauchern in der Regel unterschiedliche Versorgungsprioritäten zugeordnet. So stellen hydraulische Brems- und Lenksysteme übergeordnete Hydraulikfunktionen mit der höchsten Versorgungspriorität dar. Eine zu möglichen Funktionsbeeinträchtigungen führende Unterversorgung ist bei diesen hydraulischen Verbrauchern tunlichst auszuschließen. Dementsprechend wird hydraulischen Verbrauchern, die der Ausführung untergeordneter Hydraulikfunktionen dienen, mittels einer Prioritätsventilanordnung eine geringere Versorgungspriorität zugeordnet, mit dem Ziel, deren hydraulische Versorgung bei Bedarf zugunsten derjenigen der hydraulischen Verbraucher der höchsten Versorgungspriorität einzuschränken. Zu den untergeordneten Hydraulikfunktionen zählen insbesondere solche, die den Betrieb von Komfort- und Arbeitsfunktionen des landwirtschaftlichen Traktors, wie zum Beispiel einer hydraulischen Achs- oder Kabinenfederung, einer Arbeitshydraulik einschließlich der Versorgung hydraulisch betriebener Arbeitsaggregate eines an dem landwirtschaftlichen Traktor angebrachten Zusatz- oder Anbaugeräts, aber auch eines hydraulisch betätigbaren Dreipunkt-Krafthebers betreffen.

Vorteilhafte Ausführungen der erfindungsgemäßen Anordnung gehen aus den Unteransprüchen hervor.

Vorzugsweise weist das Druckkopierventil ein Proportionalventil auf, an dem einlassseitig der mittels der Hydraulikpumpe erzeugte Systemdruck und auslassseitig der an die Wechselventilanordnung übermittelte Hydraulikdruck anliegt, wobei das Proportionalventil unter der Wirkung des ersten Lastmeldedrucks entgegen dem auslassseitig anliegenden Hydraulikdruck in eine geöffnete Stellung gedrängt wird. Letzteres erfolgt bis zur Einstellung eines Druckgleichgewichts zwischen Einlass und Auslass des Proportionalventils, wobei der von dem Drucckopierventil bzw. dem Proportionalventil an die Wechselventilanordnung übermittelte Lastmeldedruck dann bis auf einen Offset mit dem ersten Lastmeldedruck übereinstimmt, der sich aus einer das Druckkopierventil in eine geschlossene Stellung drängenden Rückstellkraft eines Federelements ergibt. Der Offset liegt typischerweise in der Größenordnung von 1 bis 4 bar.

Bezüglich der Bereitstellung des Systemdrucks sind verschiedene Varianten denkbar. Zum einen ist es möglich, dass es sich bei dem Systemdruck um einen an einem Förderausgang der Hydraulikpumpe anliegenden Hydraulikdruck handelt. Dieser liegt üblicherweise in der Größenordnung von 200 bis 250 bar. Zum anderen kann es sich auch um einen von der Hydraulikpumpe zum Betrieb der hydrostatischen Fahrzeuglenkung erzeugten Hydraulikdruck handeln. Dieser entspricht im Wesentlichen dem ersten Lastmeldedruck zuzüglich der über das Drosselelement abfallenden Druckdifferenz und beträgt zwischen 190 und 240 bar. Welche der beiden Varianten gewählt wird, hängt letztlich von dem im Einzelfall zur Verfügung stehenden Bauraum zur Verlegung der entsprechenden Zuleitungen ab.

Des Weiteren besteht die Möglichkeit, dass der von dem Druckregelventil an die Wechselventilanordnung übermittelte Hydraulikdruck und damit letztlich der zum Betrieb der hydrostatischen Fahrzeuglenkung erzeugte Hydraulikdruck mittels eines in ein Hydraulikreservoir mündenden Druckbegrenzungsventils entsprechend einem vorgegebenen Höchstwert begrenzbar ist. Das Druckbegrenzungsventil ist insbesondere am Auslass des Drucckopierventils bzw. des von diesem umfassten Proportionalventils angeschlossen. Der Höchstwert wird im Bereich von 170 bis 200 bar vorgegeben.

Um die beim Ansprechen des Druckbegrenzungsventils in Richtung des Hydraulikreservoirs auftretenden Hydraulikverluste zu vermeiden, ist es andererseits auch vorstellbar, dass anstelle eines Druckbegrenzungsventils ein Druckregelventil vorgesehen ist, mittels dessen der an die Wechselventilanordnung übermittelte Hydraulikdruck an einem mit der Wechselventilanordnung kommunizierenden Auslass auf einen vorgegebenen Höchstwert begrenzbar ist. Die Vorgabe des Höchstwerts orientiert sich an dem vorstehend erwähnten Höchstwert.

Ferner kann vorgesehen sein, dass der an die Stelleinrichtung der Hydraulikpumpe übermittelte Hydraulikdruck mittels eines weiteren Druckregelventils an einem mit der Stelleinrichtung kommunizierenden Auslass auf einen vorgegebenen Höchstwert begrenzbar ist. Die Vorgabe des Höchstwerts erfolgt derart, dass der am Förderausgang der Hydraulikpumpe erzeugte Hydraulikdruck einen Wert von 200 und 250 bar nicht überschreitet. Überdruckbedingten Schäden des Hydrauliksystems oder der damit betriebenen hydraulischen Verbraucher bzw. peripheren Komponenten kann so zuverlässig vorgebeugt werden. Die Verwendung eines Druckregelventils stellt sicher, dass der auslassseitige und damit der am Förderausgang der Hydraulikpumpe erzeugte Hydraulikdruck bei Erreichen des vorgegebenen Höchstwerts im Sinne einer stabilen Hydraulikversorgung konstant bleibt.

Bevorzugt ist mittels eines mit dem Auslass des weiteren Druckregelventils verbundenen weiteren Drosselelements eine Drainageverbindung in Richtung eines Hydraulikreservoirs hergestellt. Das weitere Drosselelement ermöglicht einen Abbau des an die Stelleinrichtung der Hydraulikpumpe übermittelten Hydraulikdrucks, für den Fall, dass aufgrund einer seitens der hydraulischen Verbraucher rückgemeldeten reduzierten Lastanforderung eine entsprechende Verringerung des Verdrängungsvolumens durch Zurückschwenken der Hydraulikpumpe erforderlich ist.

Die erfindungsgemäße Anordnung wird im Folgenden anhand der beigefügten Zeichnungen näher erläutert. Hierbei bezeichnen übereinstimmende Bezugszeichen identische oder bezüglich ihrer Funktion vergleichbare Komponenten. Es zeigen:
- Fig. 1: ein schematisch dargestelltes erstes Ausführungsbeispiel der erfindungsgemäßen Anordnung zum Betreiben eines lastgesteuerten Hydrauliksystems eines landwirtschaftlichen Traktors,
- Fig. 2: eine Variante des in Fig. 1 wiedergegebenen ersten Ausführungsbeispiels der erfindungsgemäßen Anordnung,
- Fig. 3: ein schematisch dargestelltes zweites Ausführungsbeispiel der erfindungsgemäßen Anordnung zum Betreiben eines lastgesteuerten Hydrauliksystems eines landwirtschaftlichen Traktors, und
- Fig. 4: eine Variante des in Fig. 3 wiedergegebenen zweiten Ausführungsbeispiels der erfindungsgemäßen Anordnung.

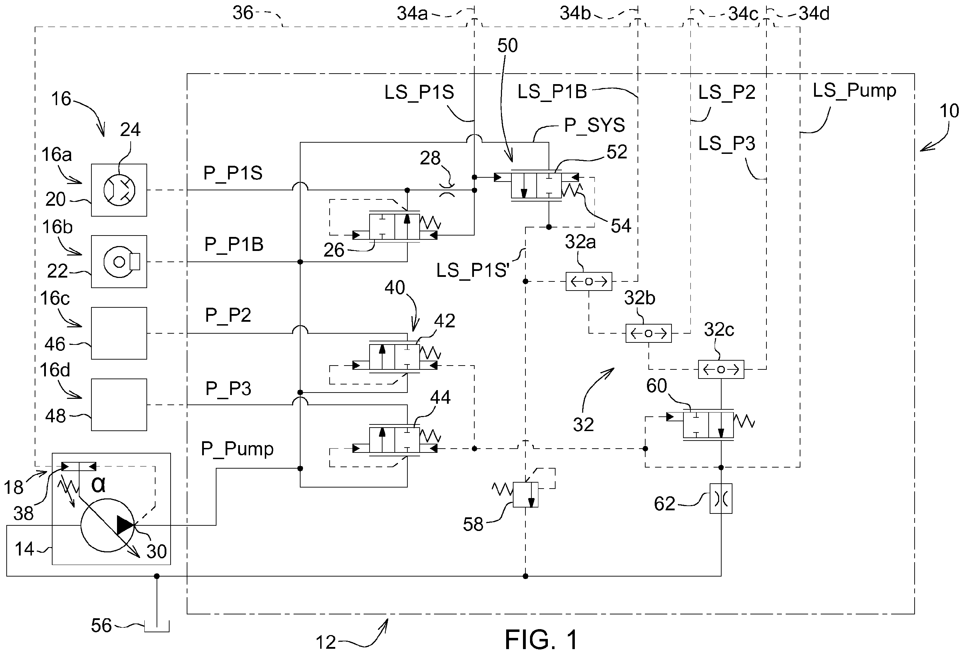

Fig. 1 zeigt ein schematisch dargestelltes erstes Ausführungsbeispiel der erfindungsgemäßen Anordnung zum Betreiben eines lastgesteuerten Hydrauliksystems eines nicht wiedergegebenen landwirtschaftlichen Traktors.

Die Anordnung 10 umfasst als Bestandteil des lastgesteuerten Hydrauliksystems 12 eine bezüglich ihres Verdrängungsvolumens einstellbare Hydraulikpumpe 14 zur Versorgung einer Vielzahl hydraulischer Verbraucher 16 mit unter Druck stehender Hydraulikflüssigkeit. Die Einstellung des Verdrängungsvolumens der Hydraulikpumpe 14 erfolgt in Abhängigkeit eines an eine Stelleinrichtung 18 der Hydraulikpumpe 14 übermittelten Lastmeldedrucks LS_Pump. Dies erlaubt eine dem tatsächlichen Leistungsbedarf entsprechende Hydraulikversorgung der hydraulischen Verbraucher 16.

Beispielsgemäß gehören zu den in Fig. 1 wiedergegebenen hydraulischen Verbrauchern 16 erste und zweite (primäre) hydraulische Verbraucher 16a, 16b, die der Ausführung übergeordneter Hydraulikfunktionen einer hydrostatischen Fahrzeuglenkung 20 sowie einer hydraulischen Bremsanlage 22 dienen, wie auch mehrere weitere (sekundäre) hydraulische Verbraucher 16c, 16d zur Ausführung untergeordneter Hydraulikfunktionen, die diverse Komfort- und Arbeitsfunktionen des landwirtschaftlichen Traktors betreffen, wie zum Beispiel einer hydraulischen Achs- oder Kabinenfederung, einer Arbeitshydraulik einschließlich der Versorgung hydraulisch betriebener Arbeitsaggregate eines an dem landwirtschaftlichen Traktor angebrachten Zusatz- oder Anbaugeräts, aber auch eines hydraulisch betätigbaren Dreipunkt-Krafthebers.

Hierbei weist der erste hydraulische Verbraucher 16a bzw. die hydrostatische Fahrzeuglenkung 20 ein Lenkorbitrol 24 sowie ein dem Lenkorbitrol 24 vorgeschaltetes erstes Druckregelventil 26 auf, das in Abhängigkeit einer über ein Drosselelement 28 abfallenden Druckdifferenz entgegen einer vorbestimmten Rückstellkraft in Abhängigkeit einer durch einen ersten Lastmeldedruck LS_P1S repräsentierten Lastanforderung der hydrostatischen Fahrzeuglenkung 20 betätigt wird.

Auf diese Weise wird ein an einem Förderausgang 30 der Hydraulikpumpe 14 anliegender Hydraulikdruck P_Pump auf einen dem ersten Lastmeldedruck LS_P1S entsprechenden Versorgungsdruck P_P1S reduziert, wohingegen ein zum Betrieb der hydraulischen Bremsanlage 22 vorgesehener Versorgungsdruck P_P1B am Förderausgang 30 der Hydraulikpumpe 14 unmittelbar abgegriffen wird.

Der erste Lastmeldedruck LS_P1S wird gemeinsam mit einem zweiten Lastmeldedruck LS_P1B, der eine Lastanforderung der hydraulischen Bremsanlage 22 repräsentiert, sowie sich aufgrund zugehöriger Lastanforderungen der weiteren hydraulischen Verbraucher 16c, 16d ergebender weiterer Lastmeldedrücke LS_P2, LS_P3 an eine Wechselventilanordnung 32 rückgemeldet.

Um eine bedarfsdeckende Versorgung mit hydraulischer Energie sicherzustellen, orientiert sich die Vorgabe des Verdrängungsvolumens der Hydraulikpumpe 14 am jeweils höchsten der von den hydraulischen Verbrauchern 16 rückgemeldeten Lastmeldedrücke LS_P1S, LS_P1B, LS_P2, LS_P3. Zu diesem Zweck bildet die Wechselventilanordnung 32 eine aus hydraulischen Wechselventilen 32a, 32b, 32c bestehende Schaltlogik, die die an zugehörigen Lastmeldeleitungen 34a, 34b, 34c, 34d anliegenden Lastmeldedrücke LS_P1S, LS_P1B, LS_P2, LS_P3 paarweise kaskadenartig miteinander vergleicht und den jeweils höchsten über eine Rückmeldeleitung 36 an die Stelleinrichtung 18 der Hydraulikpumpe 14 weiterleitet bzw. an diese übermittelt.

Vorliegend handelt es sich bei der zur Einstellung des Verdrängungsvolumens der Hydraulikpumpe 14 vorgesehenen Stelleinrichtung 18 um einen unmittelbar druckbetätigten Aktuator 38. Abweichend davon kann die Stelleinrichtung 18 jedoch auch als nach Maßgabe einer sensorischen Druckerfassung elektrisch betätigter Aktuator ausgebildet sein. In beiden Fällen dient der Aktuator der gezielten Veränderung eines Pumpenschwenkwinkels α, wobei das Verdrängungsvolumen der Hydraulikpumpe 14 mit größer werdendem Pumpenschwenkwinkel α zunimmt.

Da zum Betrieb der hydraulischen Verbraucher 16 ein und dieselbe Hydraulikpumpe 14 Verwendung findet, deren Förderkapazität jedoch begrenzt ist, sind den hydraulischen Verbrauchern 16 unterschiedliche Versorgungsprioritäten zugeordnet. Hierbei stellen die hydrostatische Fahrzeuglenkung 20 wie auch die hydraulische Bremsanlage 22 übergeordnete Hydraulikfunktionen mit der höchsten Versorgungspriorität dar. Eine zu möglichen Funktionsbeeinträchtigungen führende Unterversorgung ist bei diesen hydraulischen Verbrauchern 16a, 16b tunlichst auszuschließen. Dementsprechend wird den weiteren hydraulischen Verbrauchern 16b, 16c angesichts des Umstands, dass diese der Ausführung lediglich untergeordneter Hydraulikfunktionen dienen, mittels einer Prioritätsventilanordnung 40 eine geringere Versorgungspriorität zugeordnet, mit dem Ziel, deren hydraulische Versorgung bei Bedarf zugunsten derjenigen der beiden hydraulischen Verbraucher 16a, 16b der höchsten Versorgungspriorität einzuschränken.

Hierbei sind die ersten und zweiten hydraulischen Verbraucher 16a, 16b unmittelbar, die weiteren hydraulischen Verbraucher 16c, 16d hingegen über zwischengeschaltete zweite und dritte Druckregelventile 42, 44, die Bestandteil der Prioritätsventilanordnung 40 sind und der Bereitstellung zugehöriger Versorgungsdrücke P_P2, P_P3 dienen, mit dem Förderausgang 30 der Hydraulikpumpe 14 verbunden bzw. verbindbar. Die weiteren hydraulischen Verbraucher 16c, 16d sind in erste bzw. zweite Gruppen 46, 48 unterteilt, wobei sich die erste Gruppe 46 über das zweite Druckregelventil 42 und die zweite Gruppe 48 über das dritte Druckregelventil 44 mit dem Förderausgang 30 der Hydraulikpumpe 14 verbinden lässt. Die Darstellung zweier Gruppen 46, 48 soll dabei lediglich beispielhaften Charakter haben, es kann auch eine davon abweichende Anzahl an Gruppen bzw. Druckregelventilen vorgesehen sein.

Sind entsprechend dem in Fig. 1 wiedergegebenen Ausführungsbeispiel der Anordnung 10 mehrere Druckregelventile 42, 44 vorhanden, so werden diese zur Reduzierung des Leistungsbedarfs entsprechend der Förderkapazität der Hydraulikpumpe 14 in einer vorgegebenen Reihenfolge, nämlich bei sukzessivem Abfall der Differenz zwischen dem am Förderausgang 30 der Hydraulikpumpe 14 anliegenden Hydraulikdruck P_Pump und dem an die Stelleinrichtung 18 der Hydraulikpumpe 14 übermittelten Hydraulikdruck LS_Pump unter einen ersten bzw. zweiten Schwellenwert P_P2_min, P_P3_min (P_P2_min > P_P3_min) in ihre geschlossene Stellung verbracht.

Hierdurch lässt sich eine weitere Unterteilung bzw. Abstufung der Versorgungsprioritäten der weiteren hydraulischen Verbraucher 16c, 16d verwirklichen, sodass der Betrieb bestimmter Hydraulikfunktionen so weit wie möglich aufrechterhalten werden kann. So kann bezüglich der Reihenfolge der Drosselung des durch die beiden Druckregelventile 42, 44 hindurchtretenden Hydraulikvolumenstroms vorgesehen sein, dass zunächst Komfortfunktionen und erst danach gegebenenfalls Arbeitsfunktionen einschließlich einer hydraulischen Getriebesteuerung eines von einem Antriebsstrang des landwirtschaftlichen Traktors umfassten Fahr- und/oder Zapfwellengetriebes betroffen sind.

Wie weiterhin in Fig. 1 zu erkennen ist, wird der erste Lastmeldedruck LS_P1S lediglich mittelbar über ein zur fluidischen Trennung vorgesehenes Druckkopierventil 50 an die Wechselventilanordnung 32 rückgemeldet, wozu das Druckkopierventil 50 einen mittels der Hydraulikpumpe 14 erzeugten Systemdruck P_Sys durch Reduzierung auf einen dem ersten Lastmeldedruck LS_P1S folgenden Hydraulikdruck LS_P1S' an die Wechselventilanordnung 32 übermittelt.

Mit anderen Worten dient der erste Lastmeldedruck LS_P1S lediglich der Ansteuerung des Druckkopierventils 50, ohne dass dabei ein nennenswerter Hydraulikfluss auftritt. Eine unmittelbare fluidische Verbindung mit der Wechselventilanordnung 32 besteht insofern nicht, sodass sich unerwünschte Rückwirkungen auf den ersten Lastmeldedruck LS_P1S verlässlich ausschließen lassen. Für den Fall des als hydrostatische Fahrzeuglenkung 20 ausgebildeten ersten hydraulischen Verbrauchers 16a gewährleistet dies ein vom Schaltzustand der Wechselventilanordnung 32 unabhängiges gleichbleibendes Lenkverhalten.

Lastspitzen, die beim Betrieb der hydrostatischen Fahrzeuglenkung 20 auftreten, führen zu einer entsprechenden Erhöhung der über das Drosselelement 28 abfallenden Druckdifferenz und verursachen eine Zunahme der Auslenkung des dem Lenkorbitrol 24 vorgeschalteten ersten Druckregelventils 26 in Richtung einer durchlässigen Stellung, was aufgrund der kurzen Regelstrecke zu einer besonders reaktionsarmen und damit "dynamischen" Anpassung des zum Betrieb der hydrostatischen Fahrzeuglenkung 20 erzeugten Hydraulikdrucks P_P1S führt. Die Druckdifferenz wird hierzu in der Größenordnung von 10 bis 20 bar vorgegeben.

Der geringfügige, aber kontinuierliche Fluss von Hydraulikflüssigkeit durch das Drosselelement 28 im Bereich von 1 bis 5 Litern pro Minute gewährleistet zudem, dass ein innerhalb des Hydraulikreislaufs der hydrostatischen Fahrzeuglenkung 20 bei einem Kaltstart des landwirtschaftlichen Traktors vorhandenes Temperaturgefälle rasch abgebaut wird, ein Verklemmen insbesondere des Lenkorbitrols 24 aufgrund thermischer Unterschiede bzw. dadurch verursachter mechanischer Spannungen nicht auftritt. Dies ist vor allem bei niedrigen bzw. winterlichen Außentemperaturen von Belang.

Gemäß Fig. 1 weist das Druckkopierventil 50 ein Proportionalventil 52 auf, an dem einlassseitig der mittels der Hydraulikpumpe 14 erzeugte Systemdruck P_Sys und auslassseitig der an die Wechselventilanordnung 32 übermittelte Hydraulikdruck LS_P1S' anliegt, wobei das Proportionalventil 52 unter der Wirkung des ersten Lastmeldedrucks LS_P1S entgegen dem auslassseitig anliegenden Hydraulikdruck LS_P1S' in eine geöffnete Stellung gedrängt wird. Letzteres erfolgt bis zur Einstellung eines Druckgleichgewichts zwischen Einlass und Auslass des Proportionalventils 52, wobei der von dem Druckkopierventil 50 bzw. dem Proportionalventil 52 an die Wechselventilanordnung 32 übermittelte Lastmeldedruck LS_P1S' dann bis auf einen Offset mit dem ersten Lastmeldedruck LS_P1S übereinstimmt, der sich aus einer das Druckkopierventil 50 in eine geschlossene Stellung drängenden Rückstellkraft eines Federelements 54 ergibt. Der Offset liegt typischerweise in der Größenordnung von 1 bis 4 bar.

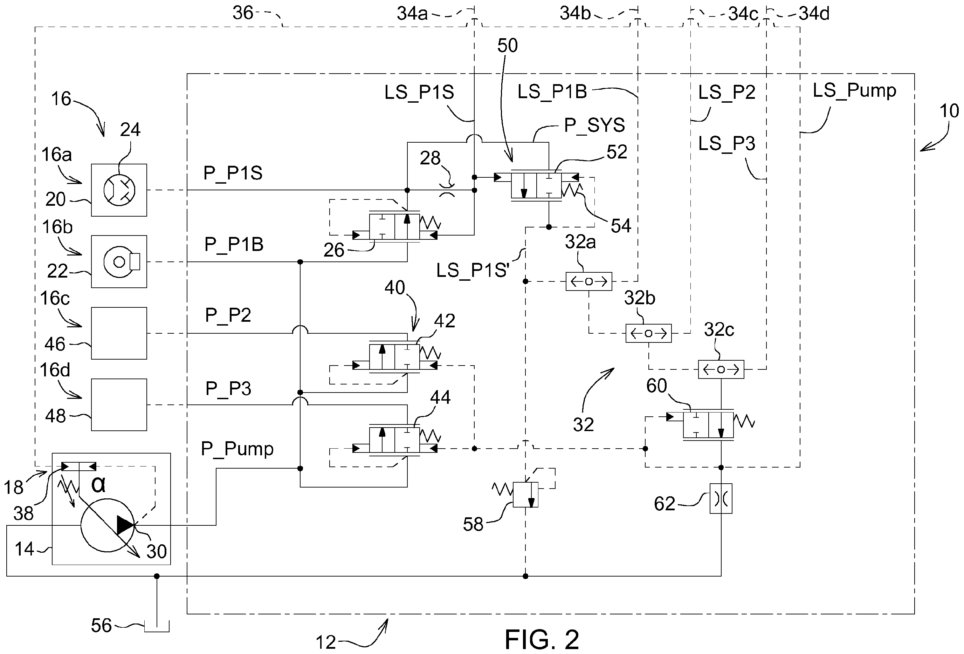

Bezüglich der Bereitstellung des Systemdrucks P_Sys sind verschiedene Varianten denkbar. Zum einen ist es gemäß Fig. 1 möglich, dass es sich bei dem Systemdruck P_Sys um den am Förderausgang 30 der Hydraulikpumpe 14 anliegenden Hydraulikdruck P_Pump handelt. Dieser liegt üblicherweise in der Größenordnung von 200 bis 250 bar. Zum anderen kann es sich gemäß Fig. 2 auch um den von der Hydraulikpumpe 14 zum Betrieb der hydrostatischen Fahrzeuglenkung 20 erzeugten Hydraulikdruck P_P1S handeln. Dieser entspricht im Wesentlichen dem ersten Lastmeldedruck LS_P1S zuzüglich der über das Drosselelement 28 abfallenden Druckdifferenz und beträgt zwischen 190 und 240 bar.

Im Falle des in Fig. 1 bzw. 2 wiedergegebenen ersten Ausführungsbeispiels ist der von dem ersten Druckregelventil 26 an die Wechselventilanordnung 32 übermittelte Hydraulikdruck LS_P1S' und damit letztlich der zum Betrieb der hydrostatischen Fahrzeuglenkung 20 erzeugte Hydraulikdruck P_P1S mittels eines in ein Hydraulikreservoir 56 mündenden Druckbegrenzungsventils 58 entsprechend einem vorgegebenen Höchstwert P_P1S_max begrenzbar. Das Druckbegrenzungsventil 58 ist am Auslass des Druckkopierventils 50 bzw. des von diesem umfassten Proportionalventils 52 angeschlossen. Der Höchstwert P_P1S_max wird im Bereich von 170 bis 200 bar vorgegeben.

Daneben ist der an die Stelleinrichtung 18 der Hydraulikpumpe 14 übermittelte Hydraulikdruck LS_Pump mittels eines Druckregelventils 60 an einem mit der Stelleinrichtung 18 kommunizierenden Auslass auf einen vorgegebenen Höchstwert LS_Pump_max begrenzbar. Die Vorgabe des Höchstwerts LS_Pump_max erfolgt derart, dass der am Förderausgang 30 der Hydraulikpumpe 14 erzeugte Hydraulikdruck P_Pump einen Wert von 200 und 250 bar nicht überschreitet. Überdruckbedingten Schäden des Hydrauliksystems oder der damit betriebenen hydraulischen Verbraucher bzw. peripheren Komponenten kann so zuverlässig vorgebeugt werden. Die Verwendung des Druckregelventils 60 stellt sicher, dass der auslassseitige und damit der am Förderausgang 30 der Hydraulikpumpe 14 erzeugte Hydraulikdruck P_Pump bei Erreichen des vorgegebenen Höchstwerts LS_Pump_max im Sinne einer stabilen Hydraulikversorgung konstant bleibt.

Mittels eines mit dem Auslass des Druckregelventils 60 verbundenen weiteren Drosselelements 62 ist eine Drainageverbindung in Richtung des Hydraulikreservoirs 56 hergestellt. Das weitere Drosselelement 62 ermöglicht einen Abbau des an die Stelleinrichtung 18 der Hydraulikpumpe 14 übermittelten Hydraulikdrucks LS_Pump, für den Fall, dass aufgrund einer seitens der hydraulischen Verbraucher 16 rückgemeldeten reduzierten Lastanforderung eine entsprechende Verringerung des Verdrängungsvolumens durch Zurückschwenken der Hydraulikpumpe 14 erforderlich ist.

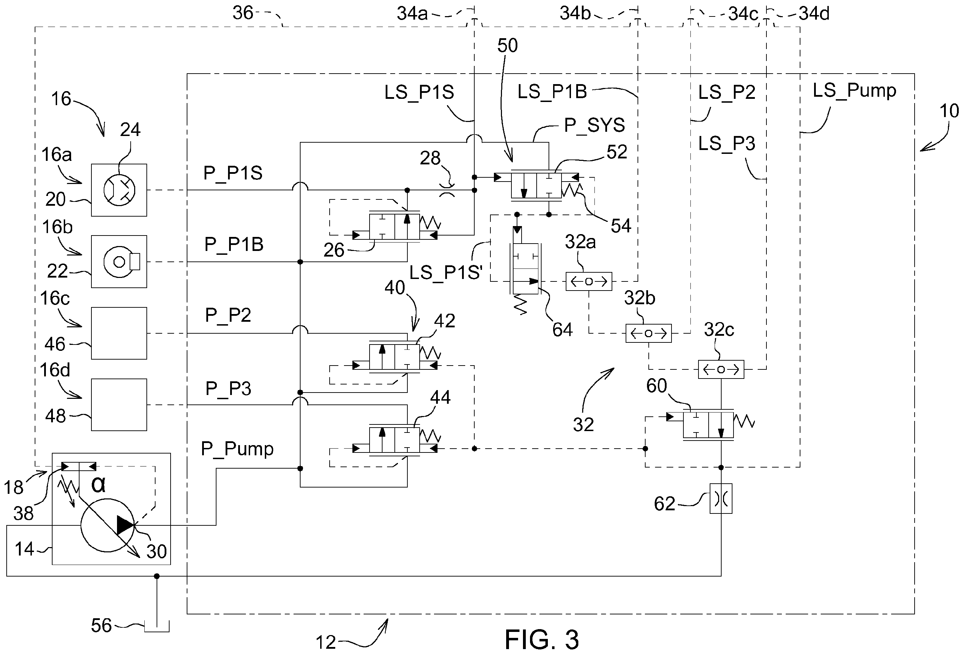

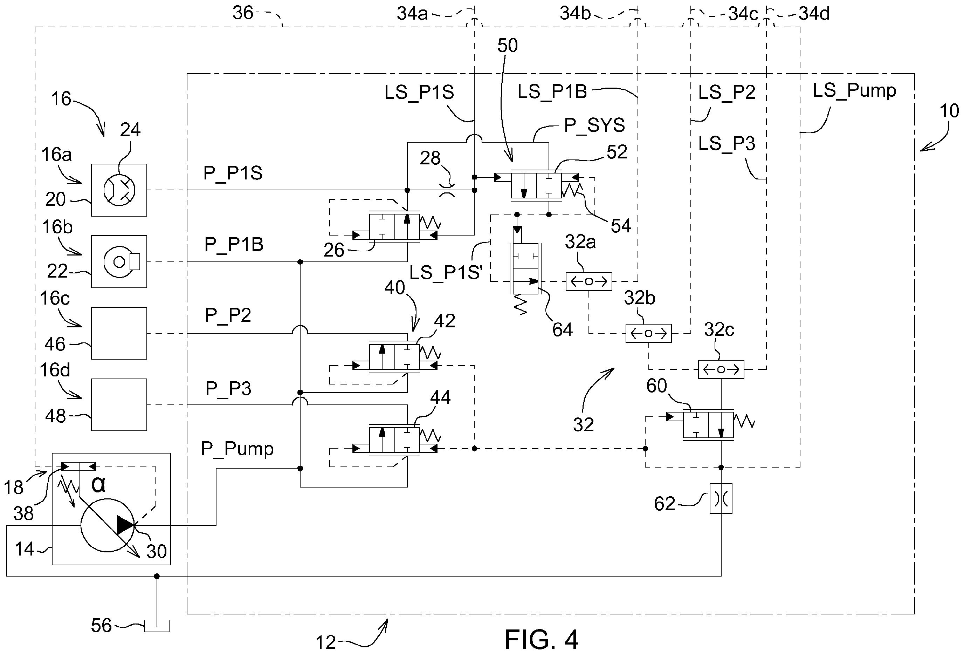

Sollen die beim Ansprechen des Druckbegrenzungsventils 58 in Richtung des Hydraulikreservoirs 56 auftretenden Hydraulikverluste vermieden werden, so ist im Falle eines in Fig. 3 bzw. 4 wiedergegebenen zweiten Ausführungsbeispiels der erfindungsgemäßen Anordnung 10 anstelle des Druckbegrenzungsventils 58 ein weiteres Druckregelventil 64 vorgesehen, mittels dessen der an die Wechselventilanordnung 32 übermittelte Hydraulikdruck LS_P1S' an einem mit der Wechselventilanordnung 32 kommunizierenden Auslass auf einen vorgegebenen Höchstwert LS_P1S'_max begrenzbar ist. Die Vorgabe des Höchstwerts LS_P1S'_max orientiert sich an dem vorstehend erwähnten Höchstwert P_P1S_max und liegt in etwa 10 bis 20 bar darunter.

Fig. 3 bzw. 4 unterscheiden sich wiederum hinsichtlich der Bereitstellung des Systemdrucks P_Sys. Zur Vermeidung von Wiederholungen sei insofern auf die einschlägige Beschreibung der betreffenden Varianten in Zusammenhang mit Fig. 1 bzw. 2 hingewiesen.

## Patentansprüche

1. Anordnung zum Betreiben eines lastgesteuerten Hydrauliksystems eines landwirtschaftlichen Traktors, umfassend eine bezüglich ihres Verdrängungsvolumens einstellbare Hydraulikpumpe (14) zur Versorgung hydraulischer Verbraucher (16) mit unter Druck stehender Hydraulikflüssigkeit, wobei die Einstellung des Verdrängungsvolumens der Hydraulikpumpe (14) in Abhängigkeit eines an eine Stelleinrichtung (18) der Hydraulikpumpe (14) übermittelten Lastmeldedrucks (LS_Pump) erfolgt,
einen als hydrostatische Fahrzeuglenkung (20) ausgebildeten ersten hydraulischen Verbraucher (16a) mit einem Lenkorbitrol (24) sowie einem dem Lenkorbitrol (24) vorgeschalteten Druckregelventil (26), das in Abhängigkeit einer über ein Drosselelement (28) abfallenden Druckdifferenz entgegen einer vorbestimmten Rückstellkraft in Abhängigkeit einer durch einen ersten Lastmeldedruck (LS_P1S) repräsentierten Lastanforderung der hydrostatischen Fahrzeuglenkung (20) betätigt wird, und wenigstens einen zweiten hydraulischen Verbraucher (16b), der eine durch einen zweiten Lastmeldedruck (LS_P1B) repräsentierte Lastanforderung an eine Wechselventilanordnung (32) rückmeldet, wobei die Wechselventilanordnung (32) den zweiten Lastmeldedruck (LS_P1B) mit dem ersten Lastmeldedruck (LS_P1S) vergleicht sowie den jeweils höheren zur Einstellung des Verdrängungsvolumens der Hydraulikpumpe (14) an die Stelleinrichtung (18) der Hydraulikpumpe (14) übermittelt,
**dadurch gekennzeichnet, dass** der erste Lastmeldedruck (LS_P1S) lediglich mittelbar über ein zur fluidischen Trennung vorgesehenes Druckkopierventil (50) an die Wechselventilanordnung (32) rückgemeldet wird, wozu das Druckkopierventil (50) einen mittels der Hydraulikpumpe (14) erzeugten Systemdruck (P_Sys) durch Reduzierung auf einen dem ersten Lastmeldedruck (LS_P1S) folgenden Hydraulikdruck (LS_P1S') an die Wechselventilanordnung (32) übermittelt.

2. Anordnung nach Anspruch 1, **dadurch gekennzeichnet, dass** das Druckkopierventil (50) ein Proportionalventil (52) aufweist, an dem einlassseitig der mittels der Hydraulikpumpe (14) erzeugte Systemdruck (P_Sys) und auslassseitig der an die Wechselventilanordnung (32) zu übermittelte Hydraulikdruck (LS_P1S') anliegt, wobei das Proportionalventil (52) unter der Wirkung des ersten Lastmeldedrucks (LS_P1S) entgegen dem auslassseitig anliegenden Hydraulikdruck (LS_P1S') in eine geöffnete Stellung gedrängt wird.

3. Anordnung nach Anspruch 1 oder 2, **dadurch gekennzeichnet, dass** es sich bei dem Systemdruck (P_Sys) um einen an einem Förderausgang (30) der Hydraulikpumpe (40) anliegenden Hydraulikdruck (P_Pump) handelt.

4. Anordnung nach Anspruch 1 oder 2, **dadurch gekennzeichnet, dass** es sich bei dem Systemdruck (P_Sys) um einen von der Hydraulikpumpe (14) zum Betrieb der hydrostatischen Fahrzeuglenkung (20) erzeugten Hydraulikdruck (P_1PS) handelt.

5. Anordnung nach einem der vorhergehenden Ansprüche,
**dadurch gekennzeichnet, dass** der von dem Druckregelventil (26) an die Wechselventilanordnung (32) übermittelte Hydraulikdruck (LS_P1S') mittels eines in ein Hydraulikreservoir (56) mündenden Druckbegrenzungsventils (58) entsprechend einem vorgegebenen Höchstwert (P_P1S_max) begrenzbar ist.

6. Anordnung nach einem der vorhergehenden Ansprüche,
**dadurch gekennzeichnet, dass** ein Druckbegrenzungsventil (60) vorgesehen ist, mittels dessen der an die Wechselventilanordnung (32) übermittelte Hydraulikdruck (LS_P1S') an einem mit der Wechselventilanordnung (32) kommunizierenden Auslass auf einen vorgegebenen Höchstwert (LS_Pump_max) begrenzbar ist.

7. Anordnung nach einem der vorhergehenden Ansprüche,
**dadurch gekennzeichnet, dass** der an die Stelleinrichtung (18) der Hydraulikpumpe (14) übermittelte Hydraulikdruck (P_Pump) mittels eines weiteren Druckbegrenzungsventils (64) an einem mit der Stelleinrichtung (18) kommunizierenden Auslass auf einen vorgegebenen Höchstwert (LS_P1S'_max) begrenzbar ist.

8. Anordnung nach Anspruch 7, **dadurch gekennzeichnet, dass** mittels eines mit dem Auslass des weiteren Druckbegrenzungsventils (64) verbundenen weiteren Drosselelements (62) eine Drainageverbindung in Richtung eines Hydraulikreservoirs (56) hergestellt ist.
